# EUROPÄISCHE PATENTSCHRIFT

(11) **EP 1 189 127 B1**
(45) Veröffentlichungstag und Bekanntmachung des Hinweises auf die Patenterteilung: **07.06.2006**
(21) Anmeldenummer: 01121673.6
(22) Anmeldetag: 14.09.2001
(51) Int. Cl.: G05D 23/13

(54) **Thermostatventil**
Thermostatic valve
Robinet thermostatique

(30) Priorität: 15.09.2000 DE 10045595
(43) Veröffentlichungstag der Anmeldung: 20.03.2002
(73) Patentinhaber: Hansgrohe AG, 77761 Schiltach (DE)
(72) Erfinder: Wolber, Helmut, 77709 Oberwolfach (DE); Gruhler, Stephan, 78647 Trossingen (DE); Wanner, Franz, 77743 Neuried (DE); Lorch, Werner, 78713 Schramberg (DE)
(74) Vertreter: Patentanwälte Ruff, Wilhelm, Beier, Dauster & Partner

(56) Entgegenhaltungen:
- DE-A- 3 740 040
- DE-A- 4 227 650
- US-A- 3 929 283
- US-A- 6 079 625

## Beschreibung

Die Erfindung geht aus von einem Thermostatventil, mit dessen Hilfe ein Mischwasser mit geregelter Temperatur aus einer Sanitärarmatur ausgegeben werden soll. Solche Thermostatventile haben üblicherweise ein temperaturempfindliches Regelelement, das in Abhängigkeit von der Temperatur des Mischwassers ein Ventilelement axial bewegt. Das Ventilelement ist als Hohlzylinder ausgebildet. Zwischen seinen axialen Stirnseiten und einem Gehäuseteil werden ringförmige Schlitze gebildet, durch die das kalte und warme Wasser einströmen. Bei der Verschiebung des Ventilelements wird der eine Schlitz größer und der andere gleichzeitig kleiner. Die beiden Wasserströme vermischen sich dann, so dass das Regelelement der Temperatur des Mischwassers ausgesetzt ist.

Es ist bereits ein solches Thermostatventil bekannt (DE 4423240). Hier ist das Ventilelement so angeordnet, dass es vom kalten Wasser durchströmt wird. An dem in Strömungsrichtung hinteren Ende des Ventilelements, also im Bereich des Schlitzes für das warme Wasser, ist eine massive Platte angeordnet, die quer zur Strömungsrichtung verläuft. Sie bildet eine Querschnittsverringerung für das kalte Wasser.

Dadurch wird eine starke Verwirbelung des kalten Wassers und infolgedessen eine gute Durchmischung mit dem warmen Wasser erreicht. Dadurch soll erreicht werden, dass das Dehnstoffelement zuverlässig auf die tatsächliche Temperatur des Mischwassers anspricht. Erkauft wird dies allerdings durch eine Querschnittsverringerung.

Ebenfalls bekannt ist eine thermostatische Mischbatterie (DE 2548650), bei der das kalte und das warme Wasser axial gegenläufig in das hohlzylindrische Ventilelement einströmen und dieses etwa mittig verlassen. In der Mischkammer dieser Mischbatterie sind zwei Ablenkeinrichtungen angeordnet, um das radial einströmende heiße und kalte Wasser in eine axiale Richtung umzulenken, so dass die Strömungen auf einander zu gerichtet sind.

Weiterhin ist ein Thermostatventil mit einem Ventilkörper bekannt (DE-A1 4227650), bei dem der Ventilkörper in Abhängigkeit von der Temperatur des Mischwassers zum gleichläufigen Öffnen bzw. Schließen zweier Einlassöffnungen nur für das kalte Wasser bewegbar ist. Ein Teil des kalten Wassers trifft dabei radial auf die axiale Strömung des warmen Wassers während der übrige Teil als axiale Strömung auf die axiale Strömung des warmen Wassers trifft.

Bei einem weiteren thermostatisch geregelten Mischventil (DE-A1 3740040) ist ein Ventilschließkörper vorhanden, bei dem das kalte Wasser radial und das warme Wasser axial einströmt. Bei diesem für einen Spezialzweck bestimmten Thermostatventil gibt es zwei Einlässe für das warme Wasser.

Der Erfindung liegt die Aufgabe zu Grunde, ein Thermostatventil zu schaffen, bei dem eine gute Vermischung des kalten und warmen Wassers vor dem Erreichen des Temperatursensors bewirkt wird und das zusätzlich druckverlustarm aufgebaut ist.

Zur Lösung dieser Aufgabe schlägt die Erfindung ein Thermostatventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Während bei den bekannten Lösungen die Strömungen des kalten und warmen Wassers in erster Linie axial aufeinander prallen, so dass sie sich praktisch gegenseitig abstoppen, wird nach der Erfindung die eine Strömung so abgelenkt, dass sie mindestens teilweise eine radiale Komponente erhält. Diese radiale Komponente trifft dann auf eine axiale Strömung, so dass die Vermischung zwar ebenfalls sehr gut erreicht wird, andererseits aber kein gegenseitiges Abstoppen der Strömungen entsteht.

Erfindungsgemäß wird die Strömung in einen radialen und einen axialen Teil aufgeteilt. Auch dies führt zu einer guten Verwirbelung und damit Vermischung der Wasserströme ohne einen Druckverlust.

Erfindungsgemäß weist zur Erreichung der gewünschten Vermischung die Mischeinrichtung eine Hülse auf, die ein freies Ende aufweist, das von der Strömung umströmt werden kann. Die Hülse führt dazu, dass praktisch keine Querschnittsverminderung auftritt.

Erfindungsgemäß weist die Hülse im Bereich ihres freien Endes radiale Durchtrittsöffnungen in Form von Löchern und/oder Schlitzen auf. Durch diese Löcher bzw. Schlitze kann das Wasser durchtreten, so dass es dadurch die radiale Komponente bildet.

In Weiterbildung der Erfindung kann vorgesehen sein, dass die Umlenkung innerhalb des hohlzylindrischen Ventilelements erfolgt. Das einströmende Wasser wird also zunächst axial gerichtet, und von dieser axialen Strömung wird mindestens ein Teil radial umgelenkt, wo er dann auf die zweite axiale Strömung trifft. Die Vermischung erfolgt also schon an einer Stelle, die von dem Temperatursensor noch eine deutliche Entfernung aufweist.

Die Durchtrittsöffnungen können insbesondere einen geschlossenen Umfang aufweisen. Es können mehrere Reihen von Durchtrittsöffnungen vorhanden sein, wobei die Zahl und die Größe der Durchtrittsöffnungen sich auch ändern kann. Es ist auch möglich, dass ein Teil der Durchtrittsöffnungen, beispielsweise Schlitze, bis zum freien Ende der Hülse reichen, also keinen geschlossenen Umfang aufweisen.

Erfindungsgemäß kann die Mischeinrichtung als Einsatz oder Fortsatz des Gehäuses ausgebildet sein.

In nochmaliger Weiterbildung der Erfindung kann vorgesehen sein, dass die Hülse derart ausgebildet ist, dass innerhalb des hohlzylindrischen Ventilelements der Strömungsquerschnitt außerhalb der Hülse und innerhalb der Hülse im wesentlichen gleich ist. Auch hierdurch werden gleichmäßige Strömungsverhältnisse und eine geringe Querschnittsverminderung erreicht.

Wenn die Hülse nicht an allen Stellen den gleichen Querschnitt aufweisen soll, so kann erfindungsgemäß vorgesehen sein, dass eine Querschnittsänderung der Hülse allmählich erfolgt, also keine Kanten oder Stufen gebildet werden, sondern geschwungene oder abgerundete Übergänge.

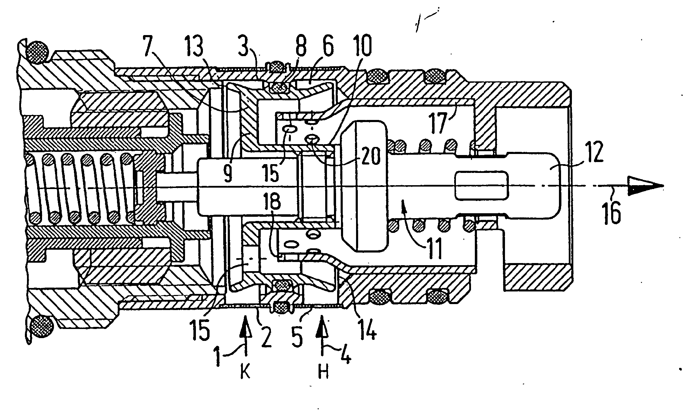

Weitere Merkmale, Einzelheiten und Vorzüge der Erfindung ergeben sich aus der folgenden Beschreibung einer bevorzugten Ausführungsform der Erfindung sowie an Hand der Zeichnung.

Hierbei zeigt die Figur einen Längsschnitt durch einen Teil eines Thermostatventils. Dieser in der Figur dargestellte Teil wird in ein Armaturengehäuse eingeschraubt. Dieses Armaturengehäuse stellt Wasserführungen für die Zuleitung von kaltem Wasser, für die Zuleitung von warmem Wasser und für die Ableitung von Mischwasser zur Verfügung. Diese Einzelheiten sind nicht dargestellt, da sie von Armaturengehäuse zu Armaturengehäuse unterschiedlich sein können und nicht den Kern der Erfindung darstellen. Das kalte Wasser tritt in Richtung des Pfeils 1 durch ein Sieb 2 in einen ringförmig ausgebildeten Raum 3. Das heiße Wasser tritt in Richtung des Pfeils 4 ebenfalls durch ein Sieb 5 in einen zweiten ringförmig ausgebildeten Raum 6. Die beiden Ringräume 3, 6 sind Teil eines Innenraums, in dem ein Ventilelement 7 axial verschiebbar angeordnet ist. Das Ventilelement 7 ist als Hohlzylinder ausgebildet und trennt die beiden Ringräume 3, 6 durch eine Dichtung 8 gegenseitig ab. Das Ventilelement ist über radiale Stege 9 mit einer Nabe 10 verbunden, die mit Hilfe eines Gewindes mit dem Ausdehnungselement 11 verbunden ist. Das Ausdehnungselement 11 enthält in einem zylindrischen Körper 12 ein Dehnstoffelement, das der Temperatur des Mischwassers ausgesetzt ist und je nach Temperatur dieses Mischwassers das Ventilelement 7 mehr oder weniger weit axial verschiebt.

Das Ventilelement 7 bildet im Bereich seines in der Figur links angeordneten Stirnendes mit einem Gehäuseteil eine ringschlitzförmige Einlassöffnung 13. Im Bereich seines gegenüberliegenden Endes bildet das Ventilelement 7 ebenfalls mit einem Gehäuseteil eine ringschlitzförmige Einlassöffnung 14 für das warme Wasser. Bei Verschiebung des Ventilelements 7 wird die eine Einlassöffnung in ihrer Größe verkleinert und die andere in gleichem Maße vergrößert.

Das kalte Wasser fließt aus dem Ringraum 3 durch die Einlassöffnung 13 und dann durch die axialen Öffnungen 15 des Ventilelements 7 axial in Richtung zu dem Auslass, der durch den Pfeil 16 dargestellt ist.

Um das Ausdehnungselement 11 herum ist eine Hülse 17 angeordnet. Die Hülse 17 liegt an der Wand des zylindrischen Raumes, in dem das Ausdehnungselement 11 angeordnet ist, an. In Richtung auf ihr in der Figur links angeordnetes freies Ende 18 verringert sich der Durchmesser der Hülse 17 über einen kegelstumpfförmigen Teil. Auch der Bereich des freien Endes 18 der Hülse ist zylindrisch ausgebildet. Das freie Ende 18 bildet eine Kante, die in axialer Richtung etwa mittig zwischen den beiden Einlassöffnungen 13, 14 angeordnet ist. Im Bereich des freien Endes 18 enthält die Hülse 17 zwei Reihen von Durchgangsöffnungen 19, 20, wobei die Durchgangsöffnungen 20 der zweiten Reihe mittig gegenüber den Durchgangsöffnungen 19 der ersten Reihe versetzt angeordnet sind.

Das in den Ringraum 6 eintretende heiße Wasser wird zunächst durch die Einlassöffnung 14 in das Innere des hohlzylindrischen Ventilelements 7 umgelenkt. Es fließt zunächst axial. Dann gelangt ein erster Teil dieses Wassers durch die zweite Reihe von Durchgangsöffnungen 20 radial in das Innere der Mischeinrichtung, die im dargestellten Beispiel von der Hülse 17 gebildet wird. Ein zweiter Teil des einströmenden heißen Wassers gelangt durch die erste Reihe von Durchgangsöffnungen 19 ebenfalls radial in das Innere der Hülse 17. Ein dritter Teil des heißen Wassers gelangt um die Kante am Ende der Hülse 18 herum in den Innenraum der Hülse.

Das kalte Wasser strömt durch die Öffnung 15 in axialer Richtung in die Hülse 17 hinein und trifft dort seitlich auf das radial eintretende heiße Wasser. Dadurch erfolgt eine starke Verwirbelung und gute Vermischung des Wassers, so dass das Mischwasser vollständig gemischt den Temperaturfühler 12 beaufschlagt. Durch die Verwendung einer zylindrische Hülse 17 tritt keine Verringerung des Strömungsquerschnitts auf. Das Thermostatventil arbeitet also druckverlustarm.

## Patentansprüche

1. Thermostatventil, mit
1.1 einem Gehäuse mit einem Einlass für kaltes Wasser, einem Einlass für heißes Wasser und einem Auslass für Mischwasser,
1.2 einem Temperaturfühler (12), der
1.2.1 der Temperatur des Mischwassers ausgesetzt ist,
1.3 einem Ventilelement (7), das
1.3.1 von den Temperaturfühler (12) in Abhängigkeit von der Temperatur des Mischwassers zum gegenläufige Öffnen bzw. Schließen zweier Einlassöffnungen (13, 14) bewegbar ist, sowie mit
1.4 einer Mischeinrichtung zum Vermischen des kalten und des warmen Wassers vor dem Erreichen des Temperaturfühlers (12), die
1.4.1 derart ausgebildet ist, dass sie die Strömung des kalten oder warmen Wassers mindestens teilweise radial umlenkt, wobei
1.4.2 die umgelenkte Strömung in einen radialen und einen axialen Teil aufgeteitl wird und
1.4.3 auf eine axiale Strömung des warmen bzw. kalten Wassers trifft, und
1.5 die Mischeinrichtung eine Hülse (17) aufweist, die an ihrem freien Ende (18) umströmbar ist und
1.6 im Bereich ihres freien Endes (18) radiale Durchtrittsöffnungen (19, 20) in Form von Löchern und/oder Schlitzen aufweist.

2. Thermostatventil nach Anspruch 1 oder 2, bei den die Umlenkung innerhalb des hohlzylindrischen Ventilelements (7) erfolgt.

3. Thermostatventil nach Anspruch 1 oder 2, bei dem die Durchtrittsöffnungen (19, 20) einen geschlossenen Umfang aufweisen.

4. Thermostatventil nach Anspruch 1 oder 2, bei dem Schlitze bis zum freien Ende (18) der Hülse (17) reichen.

5. Thermostatventil nach einem der vorhergehenden Ansprüche, bei dem die Mischeinrichtung als Einsatz des Gehäuses ausgebildet ist.

6. Thermostatventil nach einem der vorhergehenden Ansprüche, bei dem die Hülse derart ausgebildet ist, dass innerhalb des hohlzylindrischen Ventilelements (7) der Strömungsquerschnitt außerhalb der Hülse (17) und innerhalb der Hülse (17) im wesentlichen gleich ist.

7. Thermostatventil nach einem der vorhergehenden Ansprüche, bei dem die Hülse derart ausgebildet ist, dass innerhalb des hohlzylindrischen Ventilelements (7) der Strömungsquerschnitt innerhalb der Hülse (17) größer ist als außerhalb der Hülse (17).

8. Thermostatventil nach einem der vorhergehenden Ansprüche, bei dem eine Querschnittsänderung der Hülse (17) allmählich erfolgt.

## Claims

1. Thermostat valve with
1.1 a housing with an inlet for cold water, an inlet for hot water and an outlet for mixed water,
1.2 a temperature sensor (12), which
1.2.1 is exposed to the temperature of the mixed water,
1.3 a valve element (7) which
1.3.1 is movable by the temperature sensor (12) dependent on the temperature of the mixed water to open or close two inlets in opposite directions (13, 14), and with
1.4 a mixing device to mix the cold and hot water before it reaches the temperature sensor:(12) which
1.4.1 is designed so that it diverts the flow of the cold or hot water at least partially in a radial direction, and
1.4.2 the diverted flow is divided into a radial and an axial part, and
1.4.3 contacts the hot and cold water in an axial flow, and
1.5 the mixing device has a sleeve (17) with a free end (18) around which a stream can flow, and
1.6 the mixing device has radial passages (19, 20) in the form of holes or slots at its free end (18).

2. Thermostat valve according to claim 1 or 2 wherein the diversion occurs within the hollow cylindrical valve element (7).

3. Thermostat valve according to claim 1 or 2 wherein the perimeters of the passages (19, 20) are enclosed.

4. Thermostat valve according to claim 1 or 2 wherein slots extend to the free end (18) of the sleeve (17).

5. Thermostat valve according to one of the preceding claims, wherein the mixing device is designed as an insert for the housing.

6. Thermostat valve according to one of the preceding claims, wherein the sleeve is designed so that the flow cross-section within the hollow cylindrical valve element (7) is essentially the same both outside of the sleeve (17) and inside of the sleeve (17).

7. Thermostat valve according to one of the preceding claims, wherein the sleeve is designed so that the flow cross-section within the cylindrical valve element (7) is larger within the sleeve (17) than outside of the sleeve (17).

8. Thermostat valve according to one of the preceding claims, wherein the cross-section of the sleeve (17) eventually changes.

## Revendications

1. Vanne thermostatique comprenant
1.1 un boîtier avec une entrée pour l'eau froide, une entrée pour l'eau chaude et une sortie d'eau mixte
1.2 une sonde de température (12) qui
1.2.1 est soumise à la température de l'eau mixte,
1.3 un élément de vanne (7) qui
1.3.1 en fonction de la température de l'eau mixte peut être mû par la sonde de température (12) en sens opposé pour l'ouverture ou la fermeture de deux ouvertures d'entrée d'eau (13, 14) et
1.4 un dispositif mélangeur pour mélanger l'eau froide et l'eau chaude avant d'atteindre la sonde de température (12), qui
1.4.1 est agencé de telle sorte qu'il dévie radialement, au moins partiellement, le flux d'eau froide ou d'eau chaude,
1.4.2 le flux dévié étant divisé en une partie radiale et une partie axiale et
1.4.3 rencontrant un flux axial de l'eau chaude ou de l'eau froide, et
1.5 le dispositif mélangeur présentant un douille (17) dont l'extrémité libre (18) peut être contournée par le flux et
1.6 présentant dans la zone de son extrémité libre (18) des orifices radiaux de passage (19, 20) sous forme de trous et/ou de fentes.

2. Vanne thermostatique selon la revendication 1 ou 2, dans laquelle la déviation s'effectue à l'intérieur de l'élément de vanne (7) cylindrique creux.

3. Vanne thermostatique selon la revendication 1 ou 2, dans laquelle les orifices de passage (19, 20) présentent une circonférence fermée.

4. Vanne thermostatique selon la revendication 1 ou 2, dans laquelle les fentes s'étendent jusqu'à l'extrémité libre (18) de la douille (17).

5. Vanne thermostatique selon l'une des revendications précédentes, dans laquelle le dispositif mélangeur est agencé en tant qu'un insert du boîtier.

6. Vanne thermostatique selon l'une des revendications précédentes, dans laquelle la douille est agencée de telle sorte qu'à l'intérieur de l'élément de vanne cylindrique creux (7), la section de passage à l'extérieur de la douille (17) est essentiellement la même qu'à l'intérieur de la douille (17).

7. Vanne thermostatique selon l'une des revendications précédentes, dans laquelle la douille est agencée de telle sorte qu'à l'intérieur de l'élément de vanne cylindrique creux (7) la section de passage est plus importante à l'intérieur de la douille (17) qu'à l'extérieur de la douille (17).

8. Vanne thermostatique selon l'une des revendications précédentes, dans laquelle la modification de la section de la douille (17) s'effectue progressivement.
